# EUROPEAN PATENT APPLICATION

(11) **EP 4 749 799 A1**
(43) Date of publication of application: **27.05.2026**
(21) Application number: 24842024.2
(22) Date of filing: 08.05.2024
(51) Int. Cl.: H01M 50/449, H01M 50/414, H01M 50/491, H01M 10/0525

(54) **SECONDARY BATTERY AND MANUFACTURING METHOD THEREFOR, AND ELECTRIC DEVICE**

(30) Priority: 20.07.2023 CN 202310898227
(71) Applicant: Sunwoda Mobility Energy Technology Co., Ltd., Shenzhen, Guangdong 518107 (CN)
(72) Inventor: ZHANG, Lin, Shenzhen, Guangdong 518107 (CN); CHENG, Zhong, Shenzhen, Guangdong 518107 (CN)
(74) Representative: Elzaburu S.L.P.
(86) International application number: PCT/CN2024/091584
(87) International publication number: WO 2025/016024

(57) **Abstract**

Disclosed are a secondary battery and a method of preparing the same, and an electrical device. The composite polymer coating material formed in the disclosure can achieve high bonding strength and high heat resistance of a separator through a single coating process, and has excellent hydrophilicity, so that the separator has better wettability and liquid retention capacity, which is conducive to improving ionic conductivity; in addition, the separator of the disclosure introduces fewer components, resulting in a reduced density of the composite polymer coating material and a smaller thickness of the coating.

## Description

### CROSS-REFERENCE TO RELATED APPLICATIONS

The present disclosure claims all the benefits of Chinese Patent Application No. 202310898227.1, filed on July 20, 2023 before the China National Intellectual Property Administration of the People's Republic of China, entitled "Secondary Battery and Method of Preparing Same", the entire contents of which are explicitly incorporated herein by reference.

### FIELD

The present disclosure relates to the technical field of new energy, particularly to a secondary battery and a method of preparing the same.

### BACKGROUND

In secondary batteries, in order to improve the heat resistance of a separator, a high heat-resistant inorganic particle coating can be applied to one or both sides of the base film; however, such coatings have high density, which is unfavorable for improving battery performance. In addition, the separators currently used in the market exhibit problems such as poor adhesion to positive and negative electrode sheets; particularly for power batteries, the separator and electrode sheets need to have high bonding strength to ensure the battery has high formability for convenient assembly. However, the related coating design schemes require relatively high temperature and pressure, and the bonding strength is difficult to meet the requirements.

### SUMMARY

A first aspect of the present disclosure provides a secondary battery including a positive electrode sheet, a negative electrode sheet, and a separator. The separator includes a base film and a coating disposed on at least one surface of the base film; the coating includes a composite polymer and a binder, and the composite polymer includes a first polymer of a core layer and a second polymer of a coating layer disposed on a surface of the core layer; peel strength between the separator and the positive electrode sheet is in a range of 1 N/m to 5 N/m; and a thermal shrinkage rate of the separator in a machine direction (MD) and a transverse direction (TD) is less than 5% at 130°C for 0.5 h.

In some embodiments, peel strength between the separator and the negative electrode sheet is in a range of 1 N/m to 5 N/m.

In some embodiments, the first polymer includes at least one of polybenzimidazole imide, polybenzothiazole, polybenzoxazole, polybenzazinone, polyimidazopyrrolidone, polyethersulfone, polyphenylene sulfide, polyether ketone, polydiphenyl ether, phenyl polyphenylene, parylene, bisphenol A-type polyarylate, polyhydroxybenzoate, and polyoxalylurea.

In some embodiments, the first polymer has a melting point in a range of 180°C to 400°C.

In some embodiments, the second polymer includes at least one selected from a group consisting of polyacrylic acids, polyacrylates, nitrile rubber, chloroprene rubber, polyvinyl alcohols, and a copolymer formed by any two of the foregoing.

In some embodiments, the second polymer has a softening temperature in a range of 40°C to 70°C.

In some embodiments, the composite polymer has a particle size in a range of 0.1 µm to 10 µm.

In some embodiments, the binder includes at least one of polyvinylidene fluoride, carboxymethyl cellulose, and styrene-butadiene rubber.

In some embodiments, the coating has a thickness in a range of 0.2 µm to 10 µm.

A second aspect of the present disclosure provides a method of preparing the separator of the above-described secondary battery, including:
adding particles of the first polymer into an emulsion of the second polymer, and mixing, stirring, heating, and drying a mixture thereof to obtain the composite polymer; and
mixing the composite polymer, the binder, and water to form a slurry, coating the slurry on at least one surface of the base film, and curing the slurry to form a coating, thereby obtaining the separator.

In some embodiments, the stirring and heating include heating to 40°C to 100°C and stirring for 0.5 h to 10 h.

In some embodiments, the drying is performed at 50°C to 85°C.

In some embodiments, a mass ratio of the particles of the first polymer to the emulsion of the second polymer is (14 to 20):(1 to 6).

In some embodiments, a mass ratio of the composite polymer to the binder is (90 to 99.5):(0.5 to 10).

A third aspect of the present disclosure provides an electrical device including: the above-described secondary battery.

In the secondary battery of the present disclosure, in the composite polymer of the coating of the separator, the core layer uses a first polymer with a melting point in a range of 180°C to 400°C, and the coating layer uses a second polymer with a softening temperature in a range of 40°C to 70°C; the polymers with a high melting point and a low softening temperature are combined to exert a synergistic effect; the composite polymer coating material may achieve high bonding strength and high heat resistance of the composite separator through a single coating process.

### BRIEF DESCRIPTION OF DRAWINGS

The accompanying drawings, which form a part of the present disclosure, are used for providing a further understanding of the present disclosure. The embodiments and descriptions of the present disclosure are used for explaining the present disclosure, and do not form improper limits to the present disclosure.
Fig. 1 is a schematic structural diagram of a composite separator according to an embodiment of the present disclosure; and
Fig. 2 is an electron microscope image of a composite polymer according to an embodiment of the present disclosure.

### DETAILED DESCRIPTION

The present disclosure proposes a secondary battery and a method of preparing the same. A person skilled in the art could appropriately improve implementation of the process parameters with reference to the contents of the present disclosure. Specifically, it needs to be pointed out that all similar substitutes and modifications would have been obvious to a person skilled in the art, and are considered to be included in the present disclosure. Although the method of the present disclosure has been described through exemplary embodiments, it is obvious that those skilled in the art can modify or appropriately change and combine the method of the present disclosure without departing from the content, spirit and scope of the present disclosure, so as to achieve and apply the technology of the present disclosure. Apparently, the described embodiments are a part rather than all of the embodiments of the present disclosure, and based on the embodiments of the present disclosure, all other embodiments obtained by a person of ordinary skill in the art without inventive labor shall belong to the scope of protection of the present disclosure.

It should be noted that, in this specification, if relational terms such as "first" and "second", "step 1" and "step 2", and "(1)" and "(2)" appear, these relationship terms are merely used to distinguish one entity or operation from another entity or operation, and do not necessarily require or imply that any actual relationship or sequence exists between these entities or operations. Furthermore, the terms "include", "comprise" or any other variants thereof are intended to cover a non-exclusive inclusion, so that a process, method, article or device that includes a series of elements not only includes those elements, but also includes other elements not expressly listed, or further includes elements inherent to such process, method, article or device. Without more limitations, an element limited by "including a..." does not exclude other same elements existing in a process, a method, an article, or a device that includes the element. Meanwhile, the embodiments of the present disclosure and the features in the embodiments can be combined with each other in the case of no conflict.

In a first aspect of the present disclosure, a secondary battery is provided, including a positive electrode sheet, a negative electrode sheet, and a separator; the separator includes a base film and a coating disposed on at least one surface of the base film; the coating is a composite polymer and a binder; the composite polymer includes a first polymer of a core layer and a second polymer of a coating layer disposed on a surface of the core layer; peel strength between the separator and the positive electrode sheet is in a range of 1 N/m to 5 N/m; at 130°C for 0.5 h, a thermal shrinkage rate of the separator in a machine direction (MD) and a transverse direction (TD) is less than 5%. The coating structure is provided with a core layer and a coating layer; since the core layer is tightly coated by the coating layer, a risk that the polymer of the core layer falls off from the separator coating during long-term cycling of a battery is effectively reduced. In some embodiments, the peel strength between the separator and the positive electrode sheet may be 1 N/m, 2 N/m, 3 N/m, 4 N/m, 5 N/m, or a range between any two of the foregoing values. In some embodiments, at 130°C for 0.5h, the thermal shrinkage rate of the separator in the MD and TD directions may be 0.5%, 1%, 2%, 3%, 4%, 5%, or a range between any two of the foregoing values; the separator of the present disclosure has high heat resistance and adhesion.

In some embodiments of the present disclosure, the peel strength between the separator and the negative electrode sheet may be in a range of 1 N/m to 5 N/m. In some embodiments, the peel strength between the separator and the negative electrode sheet may be 1 N/m, 2 N/m, 3 N/m, 4 N/m, 5 N/m, or a range between any two of the foregoing values.

In some embodiments of the present disclosure, the first polymer includes at least one of polybenzimidazole imide, polybenzothiazole, polybenzoxazole, polybenzazinone, polyimidazopyrrolidone, polyethersulfone, polyphenylene sulfide, polyether ketone, polydiphenyl ether, phenyl polyphenylene, parylene, bisphenol A-type polyarylate, polyhydroxybenzoate, and polyoxalylurea. The above polymers have a melting point in a range of 180°C to 400°C, which enables the separator to have high heat resistance.

In some embodiments of the present disclosure, the second polymer includes at least one selected from a group consisting of polyacrylic acids, polyacrylates, nitrile rubber, chloroprene rubber, polyvinyl alcohols, and a copolymer formed by any two of the foregoing. The above polymers have a softening temperature in a range of 40°C to 70°C, which enables the separator to have high bonding strength.

In some embodiments of the present disclosure, the polyacrylic acids include at least one of polyacrylic acid, polymethacrylic acid, poly(2-ethylacrylic acid), poly(2-propylacrylic acid), and polybutylacrylic acid.

In some embodiments of the present disclosure, the polyacrylates include at least one of polymethyl methacrylate, polyethyl methacrylate, polyisobutyl methacrylate, hydroxypropyl polyacrylate, polymethyl acrylate, and polybutyl acrylate.

In some embodiments of the present disclosure, the polyvinyl alcohols include at least one of polyvinyl alcohol and polyvinyl acetal. The polyvinyl acetal includes at least one of polyvinyl formal, polyvinyl acetal, polyvinyl butyral, and polyvinyl furfural.

In other embodiments of the present disclosure, the first polymer and the second polymer in the composite polymer include any one of the following combinations:
polybenzimidazole imide and polyacrylic acids, polybenzoxazole and polyacrylate copolymer, polyethersulfone and polyacrylic acid copolymer, polybenzimidazole imide and polyacrylic acid copolymer.

In other embodiments of the present disclosure, a mass ratio of the first polymer to the second polymer is (14 to 20):(1 to 6). Preferably, the mass ratio is (15 to 20):(1 to 4), and more preferably, the mass ratio is (16 to 18):(1 to 4). The mass ratio of the first polymer to the second polymer within a range of the present disclosure is conducive to balancing the heat resistance and the bonding force of the separator.

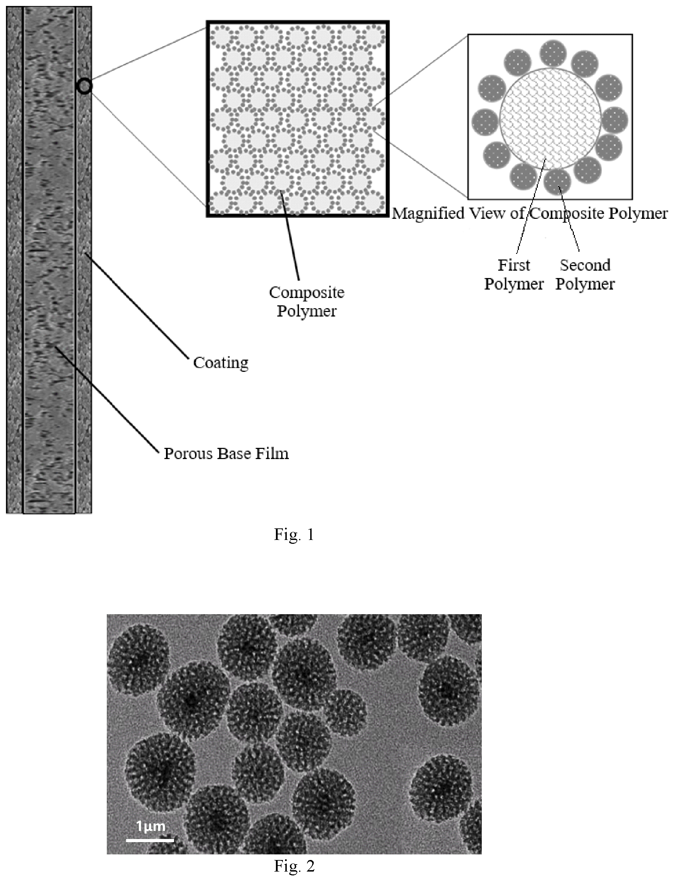

The schematic structural diagram of the composite polymer is shown in Fig. 1, and the SEM image is shown in Fig. 2. In the composite polymer, the first polymer with high heat resistance serves as the core, and the second polymer with high adhesion serves as the coating layer. The high heat-resistant polymer is tightly coated by the high-adhesion polymer, which effectively reduces the risk of the high heat-resistant polymer falling off from the separator coating during a long-term cycle of the battery; however, using the high-adhesion polymer as the coating layer can not only effectively bond the core polymer but also make the bonding between the coating and the separator tighter.

In some embodiments of the present disclosure, porosity of the base film is in a range of 35% to 60%.

In some embodiments of the present disclosure, the composite polymer has a particle size in a range of 0.1 µm to 10 µm. Preferably, the particle size of the composite polymer is in a range of 0.1 µm to 7 µm, and more preferably, the particle size of the composite polymer is in a range of 0.1 µm to 5 µm. The particle size of the composite polymer within a range of the present disclosure is conducive to improving the air permeability of the separator.

In some embodiments of the present disclosure, the binder includes at least one of polyvinylidene fluoride (PVDF), carboxymethyl cellulose (CMC), and styrene-butadiene rubber (SBR). An aqueous binder is used in the present disclosure, which on one hand promotes a tight bonding between the composite polymer and the base film, and on the other hand is conducive to improving the structural stability of the composite polymer.

In some embodiments of the present disclosure, in the coating, the mass ratio of the composite polymer to the binder is (90 to 99.5):(0.5 to 10). Preferably, the mass ratio is (93 to 99):(1 to 7), and more preferably, the mass ratio is (95 to 99):(1 to 5). The mass ratio of the composite polymer to the binder within the range of the present disclosure is conducive to improving the comprehensive performance of the separator.

In some embodiments of the present disclosure, the coating has a thickness in a range of 0.2 µm to 10 µm, preferably 0.2 µm to 7 µm, and more preferably 1 µm to 5µm. The thickness of the coating within the range of the present disclosure is conducive to balancing the high heat resistance, high adhesion, and air permeability of the separator.

In a second aspect of the present disclosure, a method of preparing the above-described secondary battery is provided, including adding particles of the first polymer into an emulsion of the second polymer, and mixing, stirring, heating, and drying a mixture thereof to obtain a composite polymer;
mixing the composite polymer, the binder, and water to form a slurry, coating the slurry on at least one surface of the base film, and curing the slurry to form a coating, thereby obtaining the separator.

In some embodiments of the present disclosure, the particles of the first polymer can be obtained by in-situ polymerization, dissolution of polymer resin and regranulation, and the like; the second polymer is an emulsion-type polymer.

In some embodiments of the present disclosure, the stirring and heating include heating to 40°C to 100°C and stirring for 0.5 h to 10 h; in some examples, the heating temperature is 40°C, 45°C, 50°C, 55°C, 60°C, 65°C, 70°C, 75°C, 80°C, 85°C, 90°C, 95°C, 100°C, or a range composed of any two of the foregoing values any two of the foregoing values; in some examples, the stirring time is 0.5 h, 1 h, 2 h, 3 h, 4 h, 5 h, 6 h, 7 h, 8 h, 9 h, 10 h, or a range composed of any two of the foregoing values any two of the foregoing values. The stirring and heating conditions within the range of the present disclosure are conducive to promoting uniform mixing of the slurry without damaging the structure of the composite polymer.

In some embodiments of the present disclosure, the drying is performed in a range of 50°C to 85°C; in some examples, the drying is performed at 50°C, 55°C, 60°C, 65°C, 70°C, 75°C, 80°C, 85°C, or a range composed of any two of the foregoing values any two of the foregoing values. The stirring, heating, and drying conditions within a range of the present disclosure is conducive to promoting uniform mixing of the slurry without damaging the structure of the composite polymer.

In some embodiments of the present disclosure, the mass ratio of the particles of the first polymer to the emulsion of the second polymer in the composite polymer is (14 to 20):(1 to 6); preferably (15 to 20):(1 to 4), and more preferably (16 to 18):(1 to 4). The mass ratio of the particles of the first polymer to the emulsion of the second polymer in the composite polymer within a range of the present disclosure is conducive to balancing the heat resistance and adhesion of the separator and enables the separator to achieve excellent performance.

In some embodiments of the present disclosure, the mass ratio of the composite polymer to the binder is (90 to 99.5):(0.5 to 10), preferably (93 to 99):(1 to 7), and more preferably (95 to 99):(1 to 5).

In some embodiments of the present disclosure, the base film is a porous base film with a porosity in a range of 30% to 80%.

In some embodiments of the present disclosure, the base film includes any one of a polyolefin-based porous base film, a non-woven fabric porous base film, and a polyvinylidene fluoride porous base film.

In some embodiments of the present disclosure, the thermal stability, liquid retention rate, ionic conductivity, and peel strength of the composite separator of the present disclosure are compared with those of separators of other comparative examples through tests, and results thereof show that the composite separator of the present disclosure can maintain excellent levels in all aspects, and is significantly superior to the separators of the comparative examples especially in thermal stability, liquid retention rate, and ionic conductivity.

In a third aspect of the present disclosure, an electrical device is provided, including the above-described secondary battery.

In some embodiments of the present disclosure, the coating side of the composite separator is thermocompression-bonded with the positive and negative electrode sheets separately for battery assembly.

In other embodiments of the present disclosure, the positive electrode sheet includes a positive electrode active material, and the positive electrode active material may include at least one of a ternary lithium positive electrode material and a lithium iron phosphate positive electrode material; the negative electrode sheet includes a negative electrode active material, and the negative electrode active material may include at least one of graphite and a silicon-oxygen composite material; the conductive agent may include carbon black, conductive graphite, VGCF (vapor-grown carbon fiber), carbon nanotubes, graphene, and the like; the binder may include at least one of polyvinylidene fluoride (PVDF), carboxymethyl cellulose (CMC), styrene-butadiene rubber (SBR), polyacrylic acid (PAA) and salts thereof, polytetrafluoroethylenes (PTFE), and polyvinyl alcohol (PVA); the current collector may select metal foil with good conductivity, such as at least one of aluminum foil and copper foil; the lithium-ion battery of the present disclosure may be a full-cell, a half-cell, or a symmetric cell, and may also be a button cell or a pouch cell.

In some embodiments of the present disclosure, the electrolyte may use a 1 M to 1.5 M lithium hexafluorophosphate electrolyte. In some embodiments, the battery electrolyte uses 1 M lithium hexafluorophosphate as the lithium salt, and a mixture of ethylene carbonate (EC), dimethyl carbonate (DMC), and ethyl methyl carbonate (EMC) in a volume ratio of 1:1:1 as the solvent.

In each group of comparative experiments provided in the disclosure, unless otherwise specified, experimental conditions, materials, and the like remain consistent except for differences noted in the groups, so as to ensure comparability. Furthermore, the materials used in the disclosure are all commercially available.

The secondary battery and the method of preparing the same provided by the present disclosure will be further described below.

### Example 1

(1) Preparation of the separator:
   providing polybenzimidazole imide (melting point: 270°C) particles with a particle size of 1 µm; and providing a polyacrylic acid-polymethyl methacrylate copolymer (softening temperature: 50°C) emulsion with a particle size of 0.2 µm;
   loading the polyacrylic acid-polymethyl methacrylate copolymer onto the polybenzimidazole imide particles and mixing polybenzimidazole imide and polyacrylic acid-polymethyl methacrylate copolymer at a mass ratio of 17:3, heating to 50°C, stirring for 1 h, and drying at 60°C to obtain the composite polymer, in which an SEM image of its morphology is shown in Fig. 2;
   adding a PVDF aqueous binder into the composite polymer and adding deionized water for slurrying to prepare a slurry, in which the addition amount of the composite polymer is 98% of the mass of the slurry, the addition amount of the aqueous binder is 2% of the slurry mass, and the addition amount of deionized water is 50 wt% of the powder mass;
   providing a porous base film, specifically a polyethylene-based film with a porosity of 40%; and
   coating the slurry on one surface of the porous base film and drying at 60°C to obtain a composite separator with a coating thickness of 3 µm.
(2) Preparation of the positive electrode sheet:
   adding the ternary NCM622 positive electrode active material, polyvinylidene fluoride (PVDF), and conductive carbon black at a mass ratio of 96:2:2 to N-methylpyrrolidone (NMP) solvent, stirring uniformly and coating on the aluminum foil, and undergo drying, calendering, and slitting processes to prepare the positive electrode sheet.
(3) Preparation of the negative electrode sheet:
   adding the graphite negative electrode active material, conductive carbon black, and carboxymethyl cellulose (CMC) at a mass ratio of 96:2:2 to deionized water, stirring uniformly and coating on copper foil, and undergo drying, calendering, and slitting processes to prepare the negative electrode sheet.
(4) Preparation of the electrolyte:
   dissolving lithium hexafluorophosphate in a mixed solution of ethylene carbonate (EC), dimethyl carbonate (DMC), in which ethyl methyl carbonate (EMC) to prepare the electrolyte; the mass ratio of ethylene carbonate, dimethyl carbonate, and ethyl methyl carbonate is 1:1:1, and a concentration of lithium hexafluorophosphate in the electrolyte is 1 M.
(5) Production of the battery:
   stacking the prepared positive electrode sheet, separator, and negative electrode sheet in sequence with the separator placed between the positive and negative electrode sheets; undergoing winding, thermocompression shaping, and tab welding, obtaining a bare cell; placing the bare cell in an outer packaging aluminum-plastic film, baking in an oven at 85±10°C for 24h, injecting the above-prepared electrolyte into a dried battery, and performing standing, formation, and grading processes to complete the preparation of the lithium-ion pouch cell.

### Other Examples and Comparative Examples:

The composite separators were prepared with reference to the preparation method of Example 1, and differences thereof are shown in Table 1 below.

**Table 1**

| | Type and Melting Point of the First Polymer | Type and Softening Temperature of the Second Polymer | Mass Ratio of Particles of the First Polymer to Emulsion of the Second Polymer | Mass Percentage of Composite Polymer in Slurry (%) | Type and Mass Percentage of Binder (%) | Type and Porosity of Base Film (%) | Particle Size of Composite Polymer (µm) | Thickness of Coating (µm) |
|---|---|---|---|---|---|---|---|---|
| Example 1 | Polybenzimi dazole imide: 270°C | Polyacrylic acid-polymethyl methacrylate copolymer: 50°C | 17:3 | 98 | PVDF:2 | Polyeth ylene-based film: 40 | 1.5 | 3 |
| Example 2 | Polybenzoxa zole: 320°C | Polyacrylic acid-polymethyl methacrylate copolymer: 50°C | 17:3 | 98 | PVDF:2 | Polyeth ylene-based film: 40 | 1.3 | 3 |
| Example 3 | Polyethersulf one: 230°C | Polyacrylic acid-polymethyl methacrylate copolymer: 50°C | 17:3 | 98 | PVDF:2 | Polyeth ylene-based film: 40 | 1 | 3 |
| Example 4 | Polybenzimi dazole imide: 270°C | Nitrile rubber: 45°C | 17:03 | 98 | PVDF:2 | Polyeth ylene-based film: 40 | 1.5 | 3 |
| Example 5 | Polybenzimi dazole imide: 270°C | Polyvinyl alcohols: 55°C | 17:3 | 98 | PVDF:2 | Polyeth ylene-based film: 40 | 1.8 | 3 |
| Example 6 | Polybenzimi dazole imide: 270°C | Polyacrylic acid-polymethyl methacrylate copolymer: 50°C | 14:3 | 98 | PVDF:2 | Polyeth ylene-based film: 40 | 2.1 | 3 |
| Example 7 | Polybenzimi dazole imide: 270°C | Polyacrylic acid-polymethyl methacrylate copolymer: 50°C | 19:3 | 98 | PVDF:2 | Polyeth ylene-based film: 40 | 1.7 | 3 |
| Example 8 | Polybenzimi dazole imide: 270°C | Polyacrylic acid-polymethyl methacrylate copolymer: 50°C | 17:1 | 98 | PVDF:2 | Polyeth ylene-based film: 40 | 1.6 | 3 |
| Example 9 | Polybenzimi dazole imide: 270°C | Polyacrylic acid-polymethyl methacrylate copolymer: 50°C | 17:5 | 98 | PVDF:2 | Polyeth ylene-based film: 40 | 1.7 | 3 |
| Example 10 | Polybenzimi dazole imide: 270°C | Polyacrylic acid-polymethyl methacrylate copolymer: 50°C | 17:3 | 98 | PVDF:2 | Polyeth ylene-based film: 40 | 1.5 | 1 |
| Example 11 | Polybenzimi dazole imide: 270°C | Polyacrylic acid-polymethyl methacrylate copolymer: 50°C | 17:3 | 98 | PVDF:2 | Polyeth ylene-based film: 40 | 1.5 | 5 |
| Example 12 | Polybenzimi dazole imide: 270°C | Polyacrylic acid-polymethyl methacrylate copolymer: 50°C | 17:3 | 98 | PVDF:2 | Polyeth ylene-based film: 40 | 1.5 | 7 |
| Example 13 | Polybenzimi dazole imide: 270°C | Polyacrylic acid-polymethyl methacrylate copolymer: 50°C | 17:3 | 98 | PVDF:2 | Polyeth ylene-based film: 50 | 1.5 | 3 |
| Example 14 | Polybenzimi dazole imide: 270°C | Polyacrylic acid-polymethyl methacrylate copolymer: 50°C | 17:3 | 98 | PVDF:2 | Polypro pylene-based film: 45 | 1.5 | 3 |
| Example 15 | Polybenzimi dazole imide: 270°C | Polyacrylic acid-polymethyl methacrylate copolymer: 50°C | 17:3 | 99 | PVDF:1 | Polyeth ylene-based film: 40 | 1.5 | 3 |
| Example 16 | Polybenzimi dazole imide: 270°C | Polyacrylic acid-polymethyl methacrylate copolymer: 50°C | 17:3 | 92 | PVDF:8 | Polyeth ylene-based film: 40 | 1.5 | 3 |
| Example 17 | Polybenzimi dazole imide: 270°C | Polyacrylic acid-polymethyl methacrylate copolymer: 50°C | 17:3 | 98 | CMC: 2 | Polyeth ylene-based film: 40 | 1.5 | 3 |
| Example 18 | Polybenzimi dazole imide: 270°C | Polyacrylic acid-polymethyl methacrylate copolymer: 50°C | 17:3 | 98 | SBR:2 | Polyeth ylene-based film: 40 | 1.5 | 3 |
| Comparative Example 1 | Polybenzimi dazole imide: 270°C | - | - | mass percentage of the first polymer in slurry is 98% | PVDF:2 | Polyeth ylene-based film: 40 | particle size of the first polymer: 1 | 3 |
| Comparative Example 2 | - | Polyacrylic acid-polymethyl methacrylate copolymer: 50°C | - | mass percentage of the second polymer in slurry is 98% | PVDF:2 | Polyeth ylene-based film: 40 | particle size of the second polymer: 0.5 | 3 |
| Comparative Example 3 | - | - | - | - | - | Polyeth ylene-based film: 40 | - | - |
| Comparative Example 4 | - | - | - | - | PVDF:2 | Polyeth ylene-based film: 40 | - | Alumina coating: 3 |
| Comparative Example 5 | Polyethylene : 130°C | Polyvinylidene fluoride-hexafluoropropylene copolymer: 85°C | 17:3 | 98 | PVDF:2 | Polyeth ylene-based film: 40 | 1.5 | 3 |

Adhesion Performance Between Separator and Electrode Sheets: thermocompression bonding the coating side of the separator with the positive and negative electrode sheets respectively under a thermocompression condition of 60°C and 2 Mpa; using a universal tensile testing machine to test the peel strength between the separator and the electrode sheets and recording the peel strength as shown in Table 2.

Thermal Shrinkage Performance of the Separator: punching the prepared separator into a fixed size (100 mm×50 mm) for thermal shrinkage testing; the test conditions include 100°C/1 h and 130°C/0.5 h, and the test results are shown in Table 2.

Ionic Conductivity of the Separator: preparing a symmetric cell using the prepared separator to characterize the ionic conductivity of the separator itself, with the test results shown in Table 2; the specific production method of the symmetric cell is as follows: using copper foil as the electrode, adopting a conventional lithium-ion battery electrolyte (1 M lithium hexafluorophosphate as the lithium salt, and a mixture of ethylene carbonate (EC), dimethyl carbonate (DMC), and ethyl methyl carbonate (EMC) in a volume ratio of 1:1:1 as the solvent) as the symmetric cell electrolyte, and then assembling the battery with the separator for testing.

Liquid Retention Capacity of the Separator: punching the separator into a certain size and weighing it; after fully immersing the separator in the above-mentioned electrolyte, taking the separator out, wiping off the electrolyte on its surface, and weighing the separator again; calculating the liquid retention capacity and liquid retention rate, and recording the liquid retention rate as shown in Table 2.

**Table 2**

| Solution | Peel Strength N/m | | Thermal Shrinkage % | | Thermal Shrinkage % | | Ionic Conductivity of Separator (mS/cm) | Liquid Retention Rate (%) |
|---|---|---|---|---|---|---|---|---|
| | | | 100°C/1 h | | 130°C/0.5 h | | | |
| | Separator/ Positive Electrode | Separator/ Negative Electrode | MD | TD | MD | TD | | |
| Example 1 | 2.8 | 3.5 | 0.2 | 0 | 2 | 1.2 | 2.26 | 140 |
| Example 2 | 3 | 3.2 | 0.2 | 0 | 2 | 1 | 2.3 | 144.2 |
| Example 3 | 3 | 3.3 | 0.3 | 0 | 2.2 | 1.5 | 2.23 | 138.6 |
| Example 4 | 3.2 | 2.9 | 0.3 | 0 | 2.3 | 1.3 | 2.25 | 139 |
| Example 5 | 3.2 | 3.3 | 0.2 | 0 | 2.3 | 1 | 2.28 | 141 |
| Example 6 | 2.6 | 3.2 | 0.3 | 0 | 2.5 | 1.6 | 2.02 | 136.2 |
| Example 7 | 3 | 3.8 | 0.2 | 0 | 1.8 | 1.2 | 2.31 | 145.6 |
| Example 8 | 2 | 2.6 | 0.3 | 0 | 2.6 | 1.6 | 2.1 | 137.8 |
| Example 9 | 2.5 | 3.2 | 0.2 | 0 | 2.2 | 1.4 | 2 | 138.2 |
| Example 10 | 2.4 | 3 | 0.6 | 0.1 | 3.8 | 3 | 1.8 | 100.6 |
| Example 11 | 2.8 | 3.4 | 0 | 0 | 1 | 1 | 2.5 | 204.2 |
| Example 12 | 2.3 | 3.1 | 0 | 0 | 1.5 | 1.8 | 2.1 | 180.6 |
| Example 13 | 2.8 | 3.4 | 0.3 | 0 | 2.4 | 1.3 | 2.3 | 141 |
| Example 14 | 2.8 | 3.5 | 0.2 | 0 | 2.3 | 1.3 | 2.38 | 142.6 |
| Example 15 | 2.7 | 3.3 | 0.3 | 0 | 2.3 | 1.5 | 2.36 | 143.3 |
| Example 16 | 2.5 | 3.1 | 0.3 | 0 | 2.2 | 1.4 | 2.19 | 141.6 |
| Example 17 | 2..8 | 3.4 | 0.2 | 0 | 2.1 | 1.1 | 2.23 | 140.8 |
| Example 18 | 2.7 | 3.4 | 0.3 | 0 | 2 | 1.2 | 2.25 | 140.2 |
| Comparative Example 1 | 0 | 0 | 0.2 | 0.2 | 1.8 | 1.2 | 1.86 | 119 |
| Comparative Example 2 | 3.7 | 3.9 | 1.6 | 0.2 | 7.6 | 7.2 | 1.8 | 103.2 |
| Comparative Example 3 | 0 | 0 | 2 | 0.4 | 8.5 | 8 | 1.65 | 80.3 |
| Comparative Example 4 | 0 | 0 | 0.2 | 0.2 | 2.5 | 1.6 | 1.84 | 130.8 |
| Comparative Example 5 | 0.6 | 0 | 1 | 0.1 | 5.6 | 5 | 2.03 | 123.4 |

From the comparison between Examples 1 to 5 and Comparative Example 3, it can be seen that when the coating of the separator has a core layer and a coating layer, the core layer includes a polymer with a melting point in a range of 180°C to 400°C, and the coating layer includes a polymer with a softening temperature in a range of 40°C to 70°C, significant impacts are produced on peel strength, thermal shrinkage rate, ionic conductivity, liquid retention rate, and the like of the separator. The high heat-resistant polymer and the polymer with an appropriate softening temperature exert a synergistic effect in the coating of the separator, leading to a certain degree of improvement in both the bonding strength and heat resistance of the separator.

From the comparison between Example 1 and Comparative Examples 1 to 2, it can be seen that the separator exhibits poor heat resistance when the coating of the separator lacks the high heat-resistant polymer, and poor bonding strength when the coating of the separator lacks the high-adhesion polymer. Additionally, from Examples 1 and 7 to 9, it can be seen that the mass ratio of the high heat-resistant polymer to the high-adhesion polymer has a certain influence on the separator's performance; the mass ratio is controlled within a range of the present disclosure, which is conducive to balancing the heat resistance and bonding strength of the separator.

In summary, the separator coating used in the present disclosure has a good effect on improving the separator's performance.

The foregoing is only the description of embodiments of the disclosure to enable a person skilled in the art to understand or implement the disclosure. Various modifications to these embodiments will be apparent to a person skilled in the art, and general principles defined herein may be implemented in other embodiments without departing from the scope of the disclosure as defined in the appended claims. Thus, the disclosure is not limited to the embodiments shown herein, but conforms to the widest scope consistent with the principles and novel characteristics applied herein.

## Claims

1. A secondary battery comprising a positive electrode sheet, a negative electrode sheet, and a separator, wherein
the separator comprises a base film and a coating disposed on at least one surface of the base film;
the coating comprises a composite polymer and a binder, and the composite polymer comprises a first polymer of a core layer and a second polymer of a coating layer disposed on a surface of the core layer;
peel strength between the separator and the positive electrode sheet is in a range of 1 N/m to 5 N/m; and
a thermal shrinkage rate of the separator in a machine direction and a transverse direction is less than 5% at 130°C for 0.5 h.

2. The secondary battery according to claim 1, wherein peel strength between the separator and the negative electrode sheet is in a range of 1 N/m to 5 N/m.

3. The secondary battery according to claim 1 or 2, wherein the first polymer comprises at least one of polybenzimidazole imide, polybenzothiazole, polybenzoxazole, polybenzazinone, polyimidazopyrrolidone, polyethersulfone, polyphenylene sulfide, polyether ketone, polydiphenyl ether, phenyl polyphenylene, parylene, bisphenol A-type polyarylate, polyhydroxybenzoate, and polyoxalylurea.

4. The secondary battery according to claim 1 or 2, wherein the first polymer has a melting point in a range of 180°C to 400°C.

5. The secondary battery according to claim 1 or 2, wherein the second polymer comprises at least one selected from a group consisting of polyacrylic acids, polyacrylates, nitrile rubber, chloroprene rubber, polyvinyl alcohols, and a copolymer formed by any two of the foregoing.

6. The secondary battery according to claim 1 or 2, wherein the second polymer has a softening temperature in a range of 40°C to 70°C.

7. The secondary battery according to claim 1 or 2, wherein the composite polymer has a particle size in a range of 0.1 µm to 10 µm.

8. The secondary battery according to claim 1 or 2, wherein the binder comprises at least one of polyvinylidene fluoride, carboxymethyl cellulose, and styrene-butadiene rubber.

9. The secondary battery according to claim 1 or 2, wherein the coating has a thickness in a range of 0.2 µm to 10 µm.

10. A method of preparing the separator of the secondary battery according to claim 1 or 2, comprising:
adding particles of the first polymer into an emulsion of the second polymer, and mixing, stirring, heating, and drying a mixture thereof to obtain the composite polymer; and
mixing the composite polymer, the binder, and water to form a slurry, coating the slurry on at least one surface of the base film, and curing the slurry to form a coating, thereby obtaining the separator.

11. The method according to claim 10, wherein the stirring and heating comprise heating to 40°C to 100°C and stirring for 0.5 h to 10 h.

12. The method according to claim 10, wherein the drying is performed in a range of 50°C to 85°C.

13. The method according to claim 10, wherein a mass ratio of the particles of the first polymer to the emulsion of the second polymer is (14 to 20):(1 to 6).

14. The method according to claim 10, wherein a mass ratio of the composite polymer to the binder is (90 to 99.5):(0.5 to 10).

15. An electrical device comprising: the secondary battery according to claim 1 or 2.
